(19) Europäisches Patentamt / European Patent Office / Office européen des brevets

(11) **EP 2 794 250 B1**

(12) **EUROPEAN PATENT SPECIFICATION**

(45) Date of publication and mention
of the grant of the patent:
**05.04.2017 Bulletin 2017/14**

(21) Application number: **12820922.8**

(22) Date of filing: **18.12.2012**

(51) Int Cl.:
**B29D 30/30** (2006.01)

(86) International application number:
**PCT/IB2012/057405**

(87) International publication number:
**WO 2013/093765 (27.06.2013 Gazette 2013/26)**

(54) **PROCESS AND APPARATUS FOR BUILDING RUN-FLAT TYRES FOR VEHICLE WHEELS**

VERFAHREN UND VORRICHTUNG ZUR HERSTELLUNG VON NOTLAUFREIFEN FÜR
FAHRZEUGRÄDER

PROCÉDÉ ET APPAREIL POUR FABRIQUER DES PNEUMATIQUES À ROULAGE À PLAT POUR
ROUES DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2011 IT MI20112347
04.01.2012 US 201261583029 P**

(43) Date of publication of application:
**29.10.2014 Bulletin 2014/44**

(73) Proprietor: **Pirelli Tyre S.p.A.
20126 Milano (IT)**

(72) Inventors:
• **PORTINARI, Gianni
20126 Milano (IT)**
• **BADOLATO, Luigi Antonio
20126 Milano (IT)**

(74) Representative: **Tansini, Elio Fabrizio et al
Bugnion S.p.A.
Viale Lancetti 17
20158 Milano (IT)**

(56) References cited:
**EP-A2- 0 164 709      US-A- 4 769 104
US-A- 5 194 107      US-A- 5 582 664
US-A- 5 882 457      US-A1- 2007 113 948**

## Description

## Technical field

The present invention regards a process and an apparatus for building tyres for vehicle wheels.

More in particular, the present invention regards a process and an apparatus for building a tyre by manufacturing components starting from continuous elongated elements deposited on a forming drum.

A tyre for vehicle wheels generally comprises a carcass structure comprising at least one carcass ply having respectively opposite terminal zones engaged to respective annular anchoring structures, generally referred to as "bead wires", integrated in the areas usually referred to by the name "beads", having an inner diameter substantially corresponding to a so-called "rim diameter" of the tyre on a respective mounting rim. The tyre also comprises a crown structure comprising at least one belt layer located in a radially outer position with respect to the carcass ply and a radially outer tread band with respect to the belt layer.

It should be observed that the term tyre "component" is used to indicate any functional tyre component (for example, sub-liner, liner, carcass ply/plies, filling agent in the bead area, belt layer/s, sidewalls, sidewall inserts in the run flat tyres, anti-abrasive inserts, cushion rubber, tread band, fabric or metal reinforcements, reinforcement elements made of elastomeric material, etc) or a portion thereof.

## State of the art

Document WO 2009/131451 illustrates a device for manufacturing a cut-to-length pre-assembly for a tyre. The pre-assembly comprises an inner liner, a first and a second side wall of the tyre. The device comprises a conveyor to bring the pre-assembly cut to size up to a building drum. The device is provided with a first, a second and a third measurement device, for measuring the length of the first side wall, the second side wall and the inner liner respectively, and a correction device for correcting length differences on the basis of signals emitted by the measurement devices. The correction device comprises a pressure roller for pressing the cut pre-assembly against the building drum. The pressure roller comprises groups of independent discs which can be pressed against the pre-assembly. Document EP 1 785 263 illustrates a device for applying a narrow and thin tape of rubber to a rotating object which can be used for providing a rubber component of a tyre. The device comprises a conveyor belt, an output roller on which the belt slides and from which the rubber tape is released, a device for moving the output roller along a direction parallel to the rotation axis of the object, a device for moving the output roller along a direction perpendicular to the rotation of said object. The conveyor belt is provided with a substantially rectilinear part which extends from the output roller towards the upstream. A pressing roller presses, through a cylindrical actuator, the rubber tape against the winding surfaces of the object being rotated at the point where the initial end of the rubber tape adheres to said surface.

Document US 7,694,709 illustrates a tread application device for applying a tread on a building drum for a tyre. The device comprises a conveying device, for bringing the tread band up to the building drum, and a positioning device for positioning the band on the drum. The positioning device comprises measuring means for determining the position of a band segment and generate a position value, displacement means for displacing the segment of the band along a direction parallel to the rotation axis of the drum and control means for controlling, on the basis of the position value, the displacement means during the application of the band on the building drum.

Document US 2008/0149259 illustrates an apparatus for applying a sheet of flexible elastomeric material to a cylindrical body. The apparatus comprises an applier frame movably mounted on a support frame, an arm hinged to said applier frame for moving the applier frame approaching and moving away from the cylindrical body. The applier frame is inclined upwards and moved towards the cylindrical body up to bringing it in proximity of the cylindrical body. The elastomeric sheet is applied to the cylindrical body and the applier frame is thus brought to the initial position. The apparatus also comprises a roller which helps the sheet to adhere to the cylindrical body.

Ep 0 164 709 A2 discloses a process for laying several plies onto the outer circumference of a building drum.

## Object of the invention

In such context, the Applicant observed that the quality of the tyres produced seems to depend, among a plurality of factors, also from the correct winding of continuous elongated elements on the forming drum. Such correct winding would allow guaranteeing the mutual joining of the opposite ends of the continuous elongated element cut to size and the uniformity of the geometric and physical characteristics of the element itself along the circumferential extension of the forming drum.

The Applicant perceived that in such manner in the finished tyre it is possible to obtain a structure with high radial symmetry.

The Applicant perceived that the aforementioned uniformity is particularly influenced by the longitudinal stresses (tension or compression) to which the continuous elongated element is subjected during the deposition on the forming drum.

Therefore, the Applicant felt the need of controlling, during the deposition on the drum and the winding, the longitudinal deformation of the continuous elongated element, preferably cut to size, at each transverse section so that it is deposited to guarantee the correct joining and geometric uniformity. The Applicant found that providing the winding of the continuous elongated element on a forming drum, controlling - during the winding - the advancing speed of a transport surface which supports it towards the forming drum and the linear speed of the radially external surface of said forming drum, allows obtaining the desired uniformity for the substantial control of the tension or compression longitudinal stresses during the winding.

In particular, the length of the continuous elongated element cut to size can be adjusted so that the opposite ends perfectly match along the entire axial extension thereof (i.e. along the entire width of the continuous elongated element) and/or in such a manner as to confer to the continuous elongated element cut to size and wound a possible longitudinal tension/compression required for the component of the tyre being formed.

According to an aspect, the present invention regards a process for building run flat tyres for vehicle wheels according to claim 1.

According to another aspect, the present invention regards an apparatus for building run flat tyres for vehicle wheels according to claim 10.

Preferred embodiments of the invention are defined in the dependent claims.

During the passage between the transport surface and the radially external surface to the forming drum, successive portions of the section come to contact with the radially external surface and with the transport surface. The transport surface adheres to a first face, preferably lower, of each portion of the section. Thus, the first face advances together with the transport surface with a null relative speed with respect to said transport surface. The radially external surface adheres to a second face, opposite to the first and preferably upper, of the same section. Thus, the second face advances together with the radially external surface with a relative null speed with respect to said radially external surface.

The Applicant deems that, controlling and adjusting the speed of the aforementioned surfaces (transport surfaces and radially external with respect to the drum), allows conferring, to each stretch of the section, axial deformations that are summed and/or subtracted from the deformation due to the curvature of the section that is wound on the forming drum, in such a manner to obtain a lengthening or shortening of the entire section in its entirety.

In addition, the Applicant deems that the support surface continues up to the forming drum (without free stretches along which the section remains suspended), it allows maintaining said section guided and guarantee the correct centring/positioning on the drum.

The present invention, in at least one of the aforementioned aspects, may also have one or more of the preferred characteristics described hereinafter.

Preferably, the linear speed of the radially external surface and the speed of the transport surface are different from each other.

According to an embodiment, the linear speed of the radially external surface is higher than the speed of the transport surface.

Thus, suitably selecting the ratio between the linear speed of the radially external surface and the speed of the transport surface, allows obtaining an overall lengthening of the section.

According to an embodiment, the linear speed of the radially external surface is lower than the speed of the transport surface.

Thus, suitably selecting the ratio between the linear speed of the radially external surface and the speed of the transport surface, allows obtaining an overall shortening of the section.

Preferably, said ratio is higher than about 0.95.

Preferably, said ratio is lower than about 1.10.

Preferably, said ratio is comprised between about 1.0 and about 1.05.

Preferably, said ratio is comprised between about 0.98 and about 1.0.

In an embodiment, a longitudinal deformation of the section is higher than about -2% of the true length of the section measured before winding it around the forming drum.

Preferably the longitudinal deformation of the section is lower than about +5% of the true length of the section measured before winding it around the forming drum.

Preferably, a longitudinal deformation of the section is comprised between about 0% and about +3% of the true length of the section measured before winding it around the forming drum.

Preferably, a longitudinal deformation of the section is comprised between about -1% and about 0% of the true length of the section measured before winding it around the forming drum.

Such values are sufficient to correct the length errors caused by the variability of the step of cutting and/or stretching (stretch) or contraction (upsetting) the section so that the continuous elongated element wound on the drum has predetermined tension/contraction characteristics.

Preferably, the process comprises: fastening a theoretical length of the section equal to the circumferential extension of the radially external surface to the forming drum; measuring the true length of the section before winding it around the forming drum; setting said ratio to bring the section wound on the forming drum to the theoretical length. Controlling the length and adjustment of the same occurs after cutting and during the winding on the drum.

The circumferential extension of the continuous elongated element is given by the diameter on which the barycenter of the section thereof lies, once deposited on the drum, multiplied by the Pi.

Preferably, the true length is lower than the theoretical length.

Actually, it is preferable to adjust the cutting step in such a manner as to move the variability of the length obtained entirely in the range of the lengths lower than the theoretical one and then lengthen the continuous elongated element with the control of the aforementioned speeds (linear speed of the radially external surface higher than the speed of the transport surface).

In an alternative embodiment, the cutting step is adjusted in such a manner as to move the variability of the length obtained entirely in the range of the lengths higher than the theoretical one and then shorten the continuous elongated element with the control of the aforementioned speeds. According to an embodiment, the radially external surface to the forming drum is a radially external surface of the drum itself. The section is placed at direct contact with the drum and it will form the radially innermost component of the tyre, for example the liner.

According to an embodiment, the radially external surface to the forming drum is the radially external surface of one or more continuous elongated elements already wound on the drum. In such case, the section will form a radially innermost component of the tyre.

According to preferred embodiment, the radially external surface to the forming drum is internal to at least one circumferential recess formed in the forming drum.

Such solution is used in the building of run flat tyres provided with sidewall inserts. A forming drum provided with two circumferential recesses is used for building such tyres. A liner section which adheres to the surface of the drum external to the recesses is first wound on such drum and it only partly lies in the aforementioned recesses and subsequently two sections/inserts, are wound above the liner and each at one of the recesses. The liner section penetrates radially into the recesses by a predetermined amount as a function of the stretch which is conferred thereto. The sections/inserts are wound on a surface internal to the recesses and belonging to the liner and thus the theoretical length of each of the sections is equal to a circumferential extension internal to the relative circumferential recess.

At least two sections are advanced in parallel and simultaneously, each on a respective transport surface with a respective advancing speed. This occurs, for example for the deposition of the aforementioned sidewalls insert.

Preferably, said advancing speeds are adjustable independently of each other. This allows controlling and adjusting the different length errors of the two sections.

The apparatus comprises a first motor connected to the control unit and operatively connectable to the forming drum. The motor, preferably, rotatably moves a spindle on which the forming drum is positioned.

Preferably, the conveyor comprises a second motor, preferably of brushless type, in electrical axis with the first motor and connected to said control unit. This type of operative connection between the motors allows adjusting with extreme precision the ratio between the speed respectively of the conveyor and the forming drum and thus controlling - with equal precision - the longitudinal deformation conferred to the section.

Preferably, the transport surface is a flat surface. Hence, the section after the cutting is supported uniformly and it is not subjected to deformations before reaching the drum.

In a preferred embodiment, the forming drum can be moved close to the transport surface from above. Thus, the section lies - due to gravity - on the conveyor even when it comes to contact with the radially external surface to the drum which is placed higher. The apparatus is also structurally simple, in particular given that it is not strictly necessary to provide for the members that withhold the section on the conveyor. Such members, such as for example a roller which - due to gravity - holds the material at contact with the belt, may however be present.

The conveyor comprises two transport surfaces disposed mutually side by side and in parallel. The two surfaces are used, for example, for the deposition of the aforementioned sidewall inserts.

The two transport surfaces have advancing speed adjustable independently of each other, for controlling and adjusting different length errors of the two sections, as previously described above.

The conveyor comprises two conveyor belts parallel and side by side. The conveyor belts provide continuous and uniform support surfaces to the section or sections.

The conveyor comprises two second motors each operatively connected to a respective conveyor belt.

The apparatus comprises a device for measuring of the length of the section operatively connected to the control unit. Such device comprises, for example, one or more cameras and/or one or more photocells and/or a system for counting the advancement of the belt. The combination of the motors in electrical axis with one or more of such measuring devices allows an extremely precise and definite adjustment of the length of the sections. In case of side by side belts, the measuring device is capable of independently reading the length of each of the two sections.

According to an embodiment, the apparatus comprises an extrusion head placed upstream of the conveyor and dispensing said continuous elongated element. In this case, the continuous elongated element is produced and immediately deposited on the forming drum.

According to a different embodiment, the apparatus comprises storage devices placed upstream of the conveyor; the continuous elongated element being dispensed by said storage devices. The elongated element, after the production thereof, is for example stored on a reel-holder and it is carried in the apparatus according to the production needs. The replacement of the finished reel-holder is also simple and quick. According to variant embodiments (not illustrated), the elongated element is preserved in cartridges, rollers etc..

## Brief description of the drawings

Further characteristics and advantages shall be clearer from the detailed description of a preferred but non-exclusive embodiment of a process and an apparatus for manufacturing tyres for vehicle wheels, according to the present invention.

Such description will be outlined hereinafter with reference to the attached drawings, provided solely by way of non-limiting example, wherein:

- figure 1 is a view of a carcass building line belonging to an apparatus for building tyres for vehicle wheels according to the present invention;
- figure 2 is an elevational side view of a portion of the apparatus of figure 1;
- figure 3 illustrates an enlarged part of the portion of figure 2;
- figure 4 is an enlargement of the part of figure 3 in an operating condition;
- figure 5 is the enlargement of figure 4 in a different operating condition;
- figure 6 illustrates an element of the apparatus according to the preceding figures;
- figure 7 represents a radial semi-section of a tyre obtained with the apparatus of the preceding figures.

## Detailed description of preferred embodiments of the invention

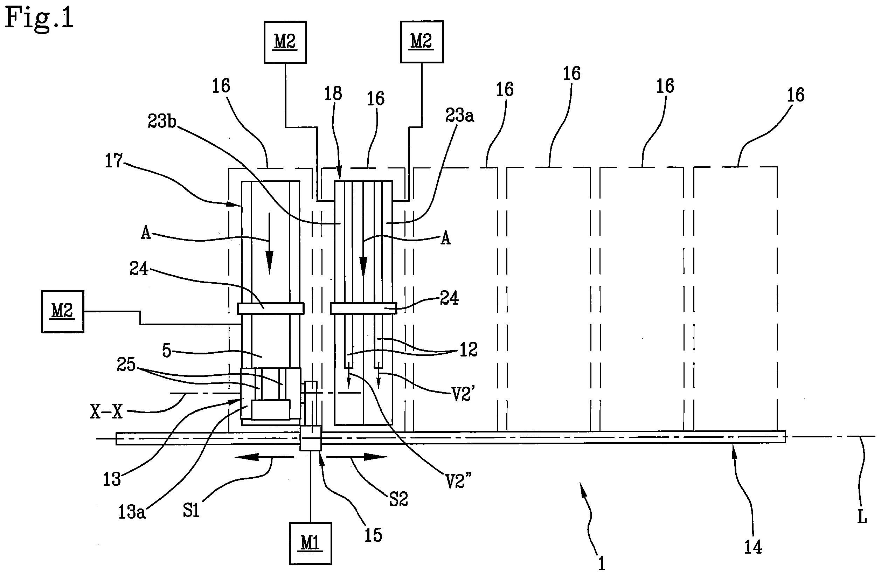

With reference to figure 1, a carcass building line belonging to an apparatus for building tyres for vehicle wheels according to the present invention was indicated in its entirety with 1.

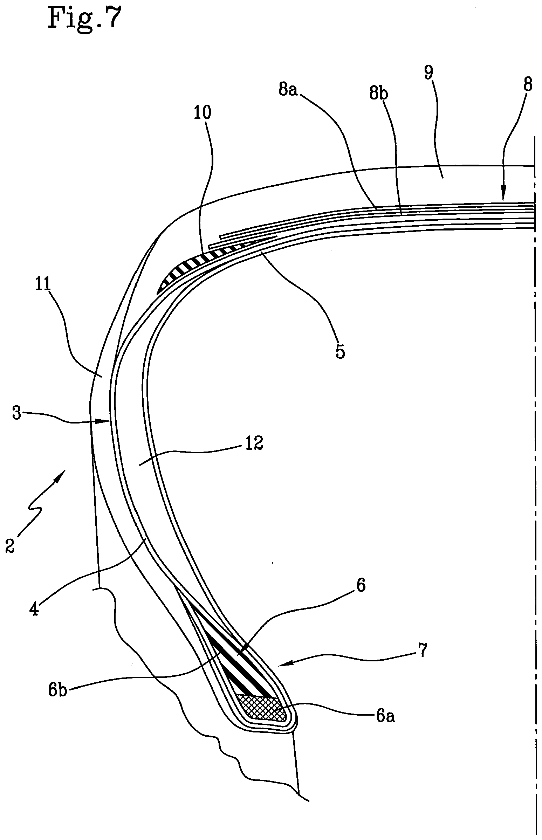

A tyre 2 of the run-flat type, provided in said apparatus and according to the process according to the present invention, is illustrated in figure 7 and it essentially comprises a carcass structure 3 having a carcass ply 4. A layer of elastomeric impermeable material or so-called liner 5 is applied inside the carcass ply 4. Two annular anchoring structures 6, each comprising a so-called bead ring 6a carrying an elastomeric filler 6b in a radially external position, are engaged to respective terminal zones of the carcass ply 4. The annular anchoring structures 6 are integrated in proximity of areas usually referred to as "beads" 7, at which there usually occurs the engagement between the tyre 2 and a respective mounting rim. A belt structure 8 comprising several belt layers 8a, 8b is circumferentially applied around the carcass ply 4, and a tread band 9 is circumferentially superimposed to the belt structure 8.

The so-called "under-belt insert" 10 each positioned between the carcass ply 4 and one of the axially opposite terminal edges of the belt structure 8 may be associated to the belt structure 8. Two sidewalls 11, each extending from the respective bead 7 to a corresponding lateral edge of the tread band 9, are applied in laterally opposite positions on the carcass structure 4.

In a position axially internal to each of the sidewalls 11 and the carcass ply 4 and axially external with respect to the liner 5, there is disposed a reinforcement insert 12 of the sidewalls. The reinforcement inserts 12 are distinctive of the run-flat tyres and serve the function of providing required rigidity to the tyre for continuing with travelling in case of loss of pressure for example due to a puncture.

The aforementioned components of the tyre 2 are made of one or more drums moving said drums between different stations for dispensing semi-finished products at each of which special devices apply the aforementioned semi-finished products on the aforementioned forming drum/s.

It should be observed that the expression "semi-finished product" of the tyre in this context is used to indicate a continuous elongated element, solely made of elastomeric material or comprising further structural elements, such as for example, textile or metallic wires and/or cords disposed according to the longitudinal direction of the semi-finished product or according to an angle with said longitudinal direction. Preferably the elongated element is dispensed by a reel or by an extruder, cut to size in a section and then wound in circumferential direction on a radially external surface to the forming drum until mutually joining opposite terminal ends of said section. In an embodiment, the elongated element has flattened shape, such as strip or strip-like element.

In the carcass building line 1, the forming drums 13 are moved between various stations for dispensing continuous elongated elements predisposed for forming, on each forming drum 13, a carcass sleeve comprising the carcass ply 4, the liner 5, the sidewall inserts 12, the annular anchoring structures 6 and possibly at least one part of the sidewalls 11.

Simultaneously, in an external sleeves building line, not illustrated, one or more auxiliary drums are sequentially moved between various work stations predisposed for forming - on each auxiliary drum - an external sleeve, comprising at least the belt structure 8, the tread band 9, and possible at least one part of the sidewalls 11.

The apparatus also comprises an assembly station, not illustrated, at which the external sleeve is coupled to the carcass sleeve.

The built tyres 2 are lastly transferred to at least one moulding and curing unit, not illustrated.

The carcass building line 2 comprises (figure 1) a guide 14 which extends preferably rectilinear along a deposition line "L". On the guide 14 there is mounted a shuttle 15 capable of moving, driven by a suitable motor (not illustrated, along the guide 14 and in both directions of movement "S1", "S2". The shuttle 15 is capable of supporting a forming drum 13 at a time and making it rotate around a rotation axis "X-X" coinciding with the longitudinal symmetry axis of the drum 13 itself and with the rotation axis of the tyre 2 being formed. In the illustrated embodiment, the forming drum 13 is carried cantilevered by the shuttle 15, which comprises a spindle capable of holding or releasing a terminal end of a central shaft of the forming drum 13.

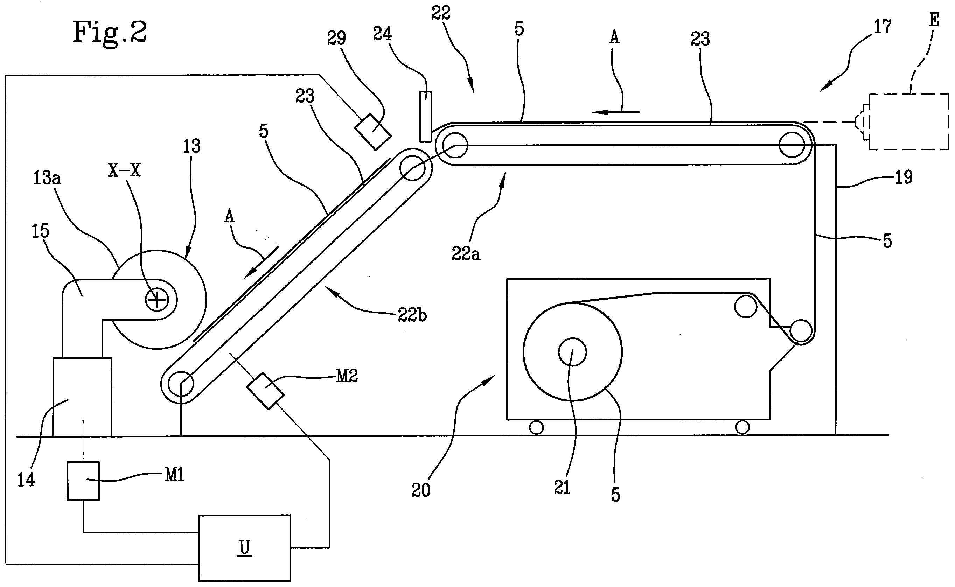

Beside the guide 14 and preferably, according to what is illustrated, on only one side thereof, there are present deposition locations 16 disposed consecutively one after the other. At least some of the aforementioned deposition locations 16 each house a respective station for dispensing a semi-finished product or continuous elongated element. Purely by way of example, in figure 1 a first deposition location 16 houses a dispensing station 17 of a liner 5 and a second deposition location 16 houses a dispensing station 18 of sidewall inserts 12. The carcass building line 1 illustrated in figure 2 is thus part of an apparatus designated for building run-flat tyres like that of figure 7.

Each of the dispensing stations substantially has the same structure schematically illustrated in figure 2 with reference to the dispensing station 17 of the liner 5.

Such dispensing station 17 comprises a frame 19 internally determining a space intended for housing a trolley 20. The trolley 20 carries the semi-finished product or continuous elongated element (in this specific case, the liner 5) wound in a reel on a rotatable reel-holder 21.

At an upper portion of the frame 19, above the space for the trolley 20, there is positioned a conveyor 22 defining a transport surface 23 movable along a feeding direction "A" for the liner 5. The conveyor 22 comprises a first conveyor belt 22a which has an upper horizontal transport surface. Downstream of the first conveyor belt 22a, with respect to the aforementioned feeding direction "A", there is consecutively disposed a second conveyor belt 22b which has an upper transport surface inclined downwards starting from the first conveyor belt 22a. Also such upper inclined transport surface is made to advance along the feeding direction "A".

The continuous elongated element 5 is unwound from the reel, forms a pattern and it is then guided and directed from the bottom upwards right on the transport surface 23.

In an alternative embodiment, the continuous elongated element 5 is directly dispensed on the transport surface 23 by an extruder "E", illustrated with a dashed line in figure 2.

Above the conveyor belts 22a, 22b there is positioned a cutting device 24 for cutting the continuous elongated element 5 fed on the transport surface 23 in sections. The cutting device 24 schematically illustrated in figure 2 is placed between the first and the second conveyor belt 22a, 22b.

A terminal end of the second conveyor belt 22b is positioned close to the guide 14 so that the shuttle 15 and the forming drum 13 carried thereby may be arranged above the transport surface 23. The shuttle 15, moving along the guide 14, is capable of carrying the forming drum 13 above each of the transport surfaces 23 of each dispensing station 17, 18 and holding it in such position.

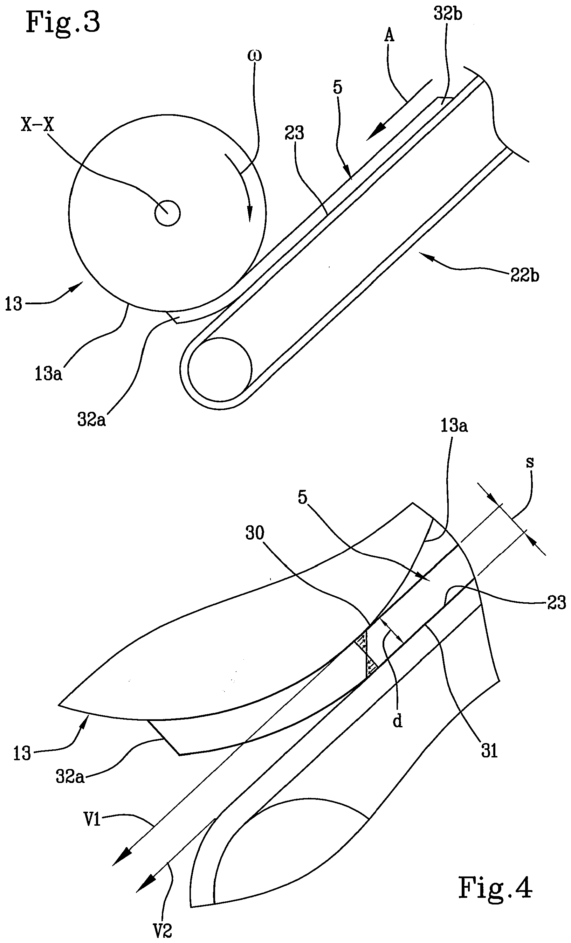

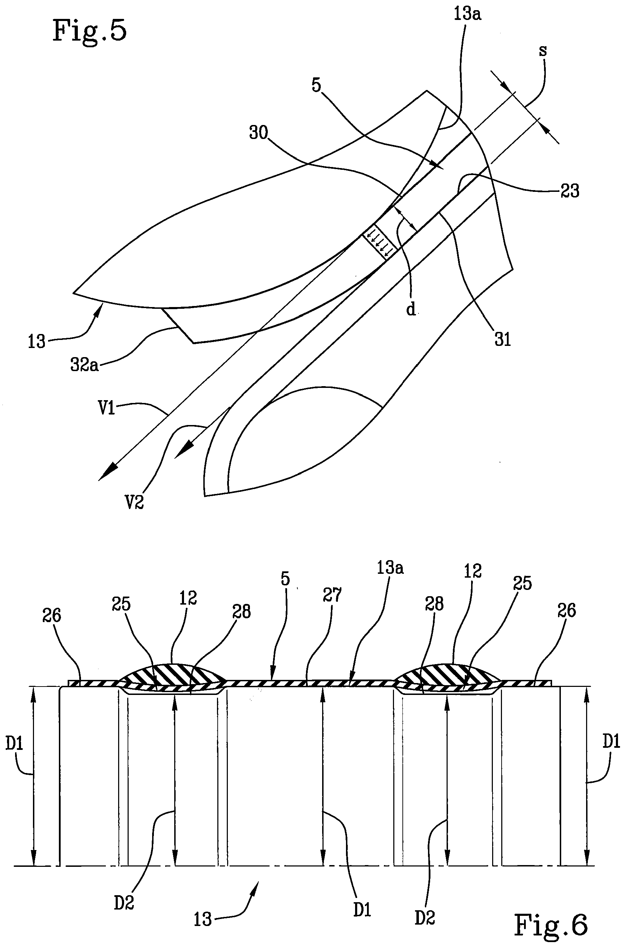

The shuttle 15 also comprises movement devices, not illustrated, adapted to vertically move the forming drum 13. The forming drum 13 can thus be moved between a first position for approaching to the transport surface 23 and a second position for moving away from said transport surface 23. When the forming drum 13 is in the first approaching position (figures 2, 3, 4 and 5), the transport surface 23 and a radially external surface 13a to the forming drum 13 are located at a minimum distance "d" substantially equal to the thickness "s" of the section of continuous elongated element 5 (figures 4 and 5). The rotation axis "X-X" of the drum 13 is orthogonal to the feeding direction "A" and thus the longitudinal extension of the section 5, 12.

The forming drum 13 illustrated in the attached figures is of the type used for building run-flat tyres 2, like the one illustrated in figure 7, and the radially external surface 13a thereof delimits two circumferential grooves 25 (figures 1 and 6) coaxial to the rotational axis "X-X" and intended to receive the sidewall inserts 12, as described further in detail hereinafter. Thus, the radially external surface 13a of the forming drum 13 has two axially external portions 26 and an axially intermediate portion 27, comprised between the grooves 25, with a larger diameter "D1" and two portions 28 within the grooves 25 with a smaller diameter "D2". A circumferential extension of the two axially external portions 26 and of the axially intermediate portion 27 is larger than a circumferential extension of the internal portions 28.

The apparatus comprises a control unit "U" which manages the operation thereof (figure 2). In particular, a motor "M1" mounted on board the shuttle 14, which rotates the forming drum 13, and motors "M2" which drive the conveyor belts 22a, 22b of the dispensing station 17, 18 are in electrical axis and are operatively connected to the control unit "U".

A measuring device 29, such as for example a photocell, is capable of measuring the true length of the section after the cutting carried out by the cutting device 24.

During use, the naked forming drum 13, i.e. without any continuous elongated element disposed on the radially external surface 13a thereof, is first carried by the shuttle 15 in the first approaching position above the transport surface 23 of the dispensing station 17 of the liner 5.

In the control unit "U" there are set:

a theoretical length "L1" of the liner section 5 which shall be first disposed on the forming drum 13 which, in order to guarantee the joining, shall be equal to the circumferential extension of the two axially external portions 26 and the axially intermediate portion 27; and

a theoretical cutting length "Ltt", smaller than the circumferential extension of the two axially external portions 26 and the axially intermediate portion 27, required so that the liner section 5 wound and joined on the forming drum 13 is radially fastened (belting) by a predetermined percentage such to penetrate at least partly into the recesses 25.

These values allow calculating a theoretical stretch "St", i.e. the lengthening required to confer to the section the theoretical cutting length "Ltt" to make it reach the theoretical length "L1":

$$St = [(L1-Ltt)/L1]x100$$

A liner section 5 is cut by the cutting device 24 according to a true cutting length "Ltr" (measured by the measuring device 29). The cutting device 24 is adjusted in such a manner as to move the variability of the true cutting length "Ltr" obtained (due to errors of various types) all falling within the range of lengths smaller than the theoretical cutting one "Ltt".

Thus, there is calculated the corrective stretch "Se" required for correcting the cutting error and bring the section from the true cutting length "Ltr" to the theoretical cutting length "Ltt":

$$Se = [(Ltt-Ltr)/Ltt]x100$$

Lastly, there is calculated a true total stretch "Sr" (as the sum of the theoretical stretch "St" and the corrective stretch "Se") to be conferred to the section of the true cutting length "Ltr" to make it reach the theoretical length "L1":

$$Sr = (St+Sr)$$

The control unit "U" adjusts the ratio between the rotation speed "ω" of the forming drum 13 and the advancing speed "V2" of the transport surface 23 of the second conveyor belt 22b for obtaining such total true stretch value "Sr".

The liner section 5 advances lying on the second conveyor belt 22b up to being interposed between the radially external surface 13a of the forming drum 13 and belt itself 22b. An upper face 30 of the liner section 5 comes to contact with the two axially external portions 26 and the axially intermediate portion 27 of the radially external surface 13a of the forming drum 13 while a lower face 31 of the liner section 5 remains at contact with the transport surface 23 (figures 4 and 5). The upper face 30 adheres and it is drawn at the same linear speed "V1" of the radially external surface 13a (the linear speed of the two axially external portions 26 and the axially intermediate portion 27). The lower face 31 remains adherent and continuous to be drawn at the same advancing speed "V2" as the transport surface 23.

The control unit "U" adjusts the rotation speed "ω" and/or the advancing speed "V2" so that the linear speed "V1" is higher than the advancing speed "V2". With suitable ratio values "V1/V2>1", further internal deformations (traction) such to lengthen each length of the section (figure 5 with V1>V2) and for generally lengthening the section up to bringing it to the theoretical length "L1" are added to the internal deformations of the section due to the curvature of the same while it is wound around the forming drum 13 (illustrated in figure 4 with V1 =V2).

Opposite lead 32a and trailing 32b ends of the liner section 5 wound on the forming drum 13 come to contact and they are joined and the tension of the liner 5 is such to make it penetrate partly into the circumferential recesses 25 (figure 6).

Thus, the shuttle 15 carries the forming drum 13 provided with liner 5 above the transport surface 23 of the subsequent station 18 for dispensing sidewall inserts 12. In this station, two parallel sections of sidewall inserts 12 are advanced on the transport surface 23 and wound above the liner 5, each at one of the circumferential recesses 25 (figure 6). The transport surface 23 of the station 18 for dispensing sidewall inserts 12 is formed by two parallel conveyor belts 23a, 23b whose speeds "V2', V2''" can be adjusted independently through dedicated second motors "M2" (figure 1). The operating principle for the independent adjustment of the length of each of the sidewall inserts 12 is the same described above regarding the liner 5.

The length of each of the sidewall insert 12, once wound on the forming drum 13 around the liner 5, should be such to allow the joining of the opposite ends and it shall thus be substantially equal to the external circumferential extension of the liner 5 lying in the recesses 25. In this case, the radially external surface 13a to the forming drum 13 is the external surface of the liner 5.

Analogous steps follow each other in the carcass building line 1 up to the deposition of all the continuous elongated elements which form the carcass structure of the tyre 2.

## Claims

1. A process for manufacturing run flat tyres for vehicle wheels, comprising:

   forming components of a green tyre (2) on a forming drum (13) provided with two circumferential recesses (25), said components comprising at least a liner (5) and two sidewall inserts (12);
   conforming, moulding and curing the tyre (2);
   wherein the formation of at least said liner (5) and said two sidewall inserts (12) comprises:

      providing a continuous elongated element (5, 12) of elastomeric material;

cutting a section of the continuous elongated element (5, 12) to size;
advancing the section while it is being supported on a transport surface (23) until interposing it between said transport surface (23) and a radially external surface (13a) to the forming drum (13) facing the transport surface (23), in such a manner as to make the section adhere to said radially external surface (13a);
winding the section around the forming drum (13) until joining a trailing end (32b) of the section with a leading head (32a) of said section;
wherein the ratio (V1/V2) between a linear speed (V1) of the radially external surface (13a) and an advancing speed (V2) of the transport surface (23) is adjusted for adjusting the length of the section while passing between said transport surface (23) and said radially external surface (13a),
wherein a liner section (5) is first wound on said drum, the liner section adhering to the surface of the drum external to the recesses and only partly lying in said recesses (25), the liner section penetrating radially into the recesses by a predetermined amount as a function of a stretch which is conferred thereto;
and subsequently two insert sections (12) are wound above the liner section and each at one of the recesses (25),
wherein the insert sections are wound on a surface internal to the recesses and belonging to the liner section (5) and thus a theoretical length of each of the insert sections is equal to a circumferential extension internal to the relative circumferential recess,
wherein the insert sections (12) are advanced in parallel and
simultaneously, each on a respective transport surface (23a, 23b) with a respective advancing speed (V2', V2"), wherein said advancing speeds (V2', V2") are adjustable independently of each other.

2. A process as claimed in the preceding claim, comprising:

fastening a theoretical length (L1) of the section equal to the circumferential extension of the radially external surface (13a) to the forming drum (13);
measuring the true length (Ltr) of the section before winding it around the forming drum (13);
setting said ratio (V1/V2) to bring the section wound on the forming drum (13) to the theoretical length (L1).

3. A process as claimed in the preceding claim, wherein the true length (Ltr) is lower than the theoretical length (L1).

4. A process as claimed in claim 1, wherein the linear speed (V1) of the radially external surface (13a) is higher than the advancing speed (V2) of the transport surface (23).

5. A process as claimed in claim 1, wherein the linear speed (V1) of the radially external surface (13a) is lower than the advancing speed (V2) of the transport surface (23).

6. A process as claimed in claim 1, wherein the ratio (V1/V2) between the linear speed (V1) of the radially external surface (13a) and the advancing speed (V2) of the transport surface (23) is higher than about 0.95.

7. A process as claimed in claim 1, wherein the ratio (V1/V2) between the linear speed (V1) of the radially external surface (13a) and the advancing speed (V2) of the transport surface (23) is lower than about 1.10.

8. A process as claimed in claim 1, wherein the ratio (V1/V2) between the linear speed (V1) of the radially external surface (13a) and the advancing speed (V2) of the transport surface (23) is comprised between about 1.0 and about 1.05.

9. A process as claimed in claim 1, wherein the ratio (V1/V2) between the linear speed (V1) of the radially external surface (13a) and the advancing speed (V2) of the transport surface (23) is comprised between about 0.98 and about 1.0.

10. An apparatus for building run flat tyres for vehicle wheels provided with sidewall inserts, comprising:

a conveyor (22) defining at least one transport surface (23) movable along a feeding direction (A) for a continuous elongated element (5, 12);
a cutting device (24) operatively acting on the conveyor (22) for cutting a section of said continuous elongated element (5, 12);
a forming drum (13) rotatable around a main axis (X-X) thereof, said forming drum (13) being provided with two circumferential recesses (25);
wherein the forming drum (13) has a radially external surface (13a) that can face the transport surface (23) to a distance (d) substantially equal to the thickness (s) of said section;
a control unit (U) operatively connected to the conveyor (22) and to the forming drum (13) for adjusting the ratio between an advancing speed (V2) of the transport surface (23) of the conveyor (22) and a rotation speed (ω) of the forming drum (13),

a measuring device (29) of the length of the section operatively connected to the control unit (U), a first motor (M1) connected to the control unit (U) and operatively connectable to the forming drum (13),

wherein the conveyor (22) comprises two conveyor belts parallel and side by side and two transport surfaces (23a, 23b) disposed mutually side by side and in parallel,

wherein the conveyor (22) comprises two second motors (M2) each operatively connected to a respective conveyor belt, and

wherein said two transport surfaces (23a, 23b) have advancing speed (V2', V2") adjustable independently of each other.

11. An apparatus as claimed in the preceding claim, wherein each of said second motors (M2) are in electrical axis with the first motor (M1) and connected to said control unit (U).

12. An apparatus as claimed in claim 10, wherein the transport surface (23) is a flat surface.

13. An apparatus as claimed in claim 10, wherein the forming drum (13) can be moved close to the transport surface (23) from above.

14. An apparatus as claimed in claim 10, comprising an extrusion head (E) placed upstream of the conveyor (22) and dispensing said continuous elongated element (5, 12).

15. An apparatus as claimed in claim 10, comprising storage devices (21) placed upstream of the conveyor (22); the continuous elongated element (5, 12) being dispensed by said storage devices (21).

**Patentansprüche**

1. Verfahren zur Herstellung von Notlaufreifen für Fahrzeugräder, umfassend:

Bilden von Komponenten eines Rohreifens (2) an einer Formungstrommel (13), die mit zwei umlaufenden Vertiefungen (25) versehen ist, wobei die Komponenten zumindest einen Mantel (5) und zwei Seitenwandeinsätze (12) umfassen;

Zurichten, Formen und Vulkanisieren des Reifens (2);

wobei die Bildung des zumindest einen Mantels (5) und der zwei Seitenwandeinsätze (12) umfasst:

Bereitstellen eines durchgehenden länglichen Elements (5, 12) aus Elastomermaterial;

Ablängen eines Abschnitts des durchgehenden länglichen Elements (5, 12);

Vorschieben des Abschnitts, während er an einer Transportoberfläche (23) getragen wird, bis er zwischen der Transportoberfläche (23) und einer radial äußeren Oberfläche (13a) an der Formungstrommel (13) zu der Transportoberfläche (23) weisend angeordnet ist, auf solche Weise, dass der Abschnitt veranlasst wird, an der radial äußeren Oberfläche (13a) zu haften;

Wickeln des Abschnitts um die Formungstrommel (13) herum, bis ein hinteres Ende (32b) des Abschnitts mit einem führenden Kopfteil (32a) des Abschnitts zusammengefügt ist;

wobei das Verhältnis (V1/V2) zwischen einer linearen Geschwindigkeit (V1) der radial äußeren Oberfläche (13a) und einer Vorschubgeschwindigkeit (V2) der Transportoberfläche (23) eingestellt wird, um die Länge des Abschnitts einzustellen, während er zwischen der Transportoberfläche (23) und der radial äußeren Oberfläche (13a) durchläuft,

wobei zuerst ein Mantelabschnitt (5) auf die Trommel gewickelt wird, wobei der Mantelabschnitt an der Oberfläche der Trommel außerhalb der Vertiefungen haftet und nur teilweise in den Vertiefungen (25) liegt, wobei der Mantelabschnitt um ein vorbestimmtes Ausmaß als Funktion auf eine Streckung, die diesem verliehen wird, radial in die Vertiefungen eindringt;

und anschließend zwei Einsatzabschnitte (12) über den Mantelabschnitt und jeweils an einer der Vertiefungen (25) gewickelt werden,

wobei die Einsatzabschnitte auf eine Oberfläche innerhalb der Vertiefungen gewickelt werden, die zu dem Mantelabschnitt (5) gehört, und damit eine theoretische Länge eines jeden der Einsatzabschnitte gleich der Umfangserstreckung innerhalb der jeweiligen umlaufenden Vertiefung ist,

wobei die Einsatzabschnitte (12) parallel und gleichzeitig vorgeschoben werden, jeder auf einer jeweiligen Transportoberfläche (23a, 23b) mit einer jeweiligen Vorschubgeschwindigkeit (V2', V2"), wobei die Vorschubgeschwindigkeiten (V2', V2") unabhängig voneinander einstellbar sind.

2. Verfahren nach dem vorhergehenden Anspruch, umfassend:

Befestigen einer theoretischen Länge (L1) des Abschnitts gleich der Umfangserstreckung der radial äußeren Oberfläche (13a) an der Formungstrommel (13);

Messen der tatsächlichen Länge (Ltr) des Abschnitts vor seinem Aufwickeln auf die Formungstrommel (13);

Festlegen des Verhältnisses (V1/V2), um den um die Formungstrommel (13) gewickelten Abschnitt auf die theoretische Länge (L1) zu bringen.

3. Verfahren nach dem vorhergehenden Anspruch, wobei die tatsächliche Länge (Ltr) geringer ist als die theoretische Länge (L1).

4. Verfahren nach Anspruch 1, wobei die lineare Geschwindigkeit (V1) der radial äußeren Oberfläche (13a) höher ist als die Vorschubgeschwindigkeit (V2) der Transportoberfläche (23).

5. Verfahren nach Anspruch 1, wobei die lineare Geschwindigkeit (V1) der radial äußeren Oberfläche (13a) niedriger ist als die Vorschubgeschwindigkeit (V2) der Transportoberfläche (23).

6. Verfahren nach Anspruch 1, wobei das Verhältnis (V1/V2) zwischen der linearen Geschwindigkeit (V1) der radial äußeren Oberfläche (13a) und der Vorschubgeschwindigkeit (V2) der Transportoberfläche (23) größer als etwa 0,95 ist.

7. Verfahren nach Anspruch 1, wobei das Verhältnis (V1/V2) zwischen der linearen Geschwindigkeit (V1) der radial äußeren Oberfläche (13a) und der Vorschubgeschwindigkeit (V2) der Transportoberfläche (23) kleiner als etwa 1,10 ist.

8. Verfahren nach Anspruch 1, wobei das Verhältnis (V1/V2) zwischen der linearen Geschwindigkeit (V1) der radial äußeren Oberfläche (13a) und der Vorschubgeschwindigkeit (V2) der Transportoberfläche (23) zwischen etwa 1,0 und etwa 1,05 liegt.

9. Verfahren nach Anspruch 1, wobei das Verhältnis (V1/V2) zwischen der linearen Geschwindigkeit (V1) der radial äußeren Oberfläche (13a) und der Vorschubgeschwindigkeit (V2) der Transportoberfläche (23) zwischen etwa 0,98 und etwa 1,0 liegt.

10. Vorrichtung zur Herstellung von Notlaufreifen für Fahrzeugräder fl die mit Seitenwandeinsätzen versehen sind, wobei das Verfahren umfasst:

eine Fördereinrichtung (22), die zumindest eine Transportoberfläche (23) definiert, die entlang einer Zuführrichtung (A) für ein durchgehendes längliches Element (5, 12) beweglich ist;

eine Schneideinrichtung (24), die wirkmäßig auf die Fördereinrichtung (22) einwirkt, um einen Abschnitt des durchgehenden länglichen Elements (5, 12) abzuschneiden;

eine Formungstrommel (13), die um eine Hauptachse (X-X) derselben drehbar ist, wobei die Formungstrommel (13) mit zwei umlaufenden Vertiefungen (25) versehen ist;

wobei die Formungstrommel (13) eine radial äußere Oberfläche (13a) aufweist, die zu der Transportoberfläche (23) in einem Abstand (d) weisen kann, der im Wesentlichen gleich der Dicke (s) des Abschnitts ist;

eine Steuereinheit (U), die mit der Fördereinrichtung (22) und der Formungstrommel (13) wirkverbunden ist, um das Verhältnis zwischen einer Vorschubgeschwindigkeit (V2) der Transportoberfläche (23) der Fördereinrichtung (22) und einer Drehzahl (w) der Formungstrommel (13) einzustellen.

eine Einrichtung (29) zur Messung der Länge des Abschnitts, wobei die Einrichtung mit der Steuereinheit (U) wirkverbunden ist,

einen ersten Motor (M1), der mit der Steuereinheit (U) verbunden und mit der Formungstrommel (13) wirkverbindbar ist,

wobei die Fördereinrichtung (22) zwei Förderbänder umfasst, die parallel und Seite an Seite verlaufen, sowie zwei Transportoberflächen (23a, 23b), die gegenseitig parallel und Seite an Seite angeordnet sind,

wobei die Fördereinrichtung (22) zwei zweite Motoren (M2) umfasst, die jeweils mit einem jeweiligen Förderband wirkverbunden sind, und wobei die zwei Transportoberflächen (23a, 23b) Vorschubgeschwindigkeiten (V2', V2") aufweisen, die unabhängig voneinander einstellbar sind.

11. Vorrichtung nach dem vorhergehenden Anspruch, wobei jeder der zweiten Motoren (M2) sich in elektrischer Achse mit dem ersten Motor (M1) befinden und mit der Steuereinheit (U) verbunden sind.

12. Vorrichtung nach Anspruch 10, wobei die Transportoberfläche (23) eine flache Oberfläche ist.

13. Vorrichtung nach Anspruch 10, wobei die Formungstrommel (13) von oben her nahe an die Transportoberfläche (23) bewegt werden kann.

14. Vorrichtung nach Anspruch 10, umfassend einen Extrusionskopf (E), der der der Fördereinrichtung (22) vorgeschaltet platziert ist und das durchgehende längliche Element (5, 12) ausgibt.

15. Vorrichtung nach Anspruch 10, umfassend Speichereinrichtungen (21), die der Fördereinrichtung (22) vorgeschaltet platziert sind; wobei das durchgehende längliche Element (5, 12) durch die Speichereinrichtungen (21) ausgegeben wird.

## Revendications

**1.** Procédé de fabrication de pneus permettant le roulage à plat pour roues de véhicule, comprenant le fait :

de former des composants d'un pneu cru (2) sur un tambour de formation (13) muni de deux évidements circonférentiels (25), lesdits composants comprenant au moins un calandrage intérieur (5) et deux inserts de flanc (12) ;
de conformer, de mouler et de vulcaniser le pneu (2) ;
dans lequel la formation d'au moins ledit calandrage intérieur (5) et lesdits deux inserts de flanc (12) comprend le fait :

de fournir un élément allongé continu (5, 12) en matériau élastomère ;
de couper une section de l'élément allongé continu (5, 12) à dimension ;
de faire avancer la section tandis qu'elle est supportée sur une surface de transport (23) jusqu'à ce qu'elle soit interposée entre ladite surface de transport (23) et une surface radialement externe (13a) au tambour de formation (13) faisant face à la surface de transport (23), de manière à amener la section à adhérer à ladite surface radialement externe (13a) ;
d'enrouler la section autour du tambour de formation (13) jusqu'à assemblage d'une extrémité arrière (32b) de la section avec une tête d'attaque (32a) de ladite section ;
dans lequel le rapport (V1/V2) entre une vitesse linéaire (V1) de la surface radialement externe (13a) et une vitesse d'avance (V2) de la surface de transport (23) est réglé pour régler la longueur de la section tout en passant entre ladite surface de transport (23) et ladite surface radialement externe (13a),
dans lequel une section de calandrage intérieur (5) est d'abord enroulée sur ledit tambour, la section de calandrage intérieur adhérant à la surface du tambour externe aux évidements et se trouvant uniquement en partie dans lesdits évidements (25), la section de calandrage intérieur pénétrant radialement dans les évidements d'une quantité prédéterminée en fonction d'un étirement qui lui est conféré ;
et par la suite deux sections d'insert (12) sont enroulées par-dessus la section de calandrage intérieur et chacune au niveau de l'un des évidements (25),
dans lequel les sections d'insert sont enroulées sur une surface interne aux évidements et appartenant à la section de calandrage intérieur (5) et ainsi une longueur théorique de chacune des sections d'insert est égale à une extension circonférentielle interne à l'évidement circonférentiel relatif,
dans lequel les sections d'insert (12) avancent en parallèle et simultanément, chacune sur une surface de transport respective (23a, 23b) avec une vitesse d'avance respective (V2', V2"), où lesdites vitesses d'avance (V2', V2") peuvent être réglées indépendamment l'une de l'autre.

**2.** Procédé tel que revendiqué dans la revendication précédente, comprenant le fait :

de fixer une longueur théorique (L1) de la section égale à l'extension circonférentielle de la surface radialement externe (13a) au tambour de formation (13) ;
de mesurer la longueur réelle (Ltr) de la section avant de l'enrouler autour du tambour de formation (13) ;
de régler ledit rapport (V1/V2) pour amener la section enroulée sur le tambour de formation (13) à la longueur théorique (L1).

**3.** Procédé tel que revendiqué dans la revendication précédente, dans lequel la longueur réelle (Ltr) est inférieure à la longueur théorique (L1).

**4.** Procédé tel que revendiqué dans la revendication 1, dans lequel la vitesse linéaire (V1) de la surface radialement externe (13a) est supérieure à la vitesse d'avance (V2) de la surface de transport (23).

**5.** Procédé tel que revendiqué dans la revendication 1, dans lequel la vitesse linéaire (V1) de la surface radialement externe (13a) est inférieure à la vitesse d'avance (V2) de la surface de transport (23).

**6.** Procédé tel que revendiqué dans la revendication 1, dans lequel le rapport (V1/V2) entre la vitesse linéaire (V1) de la surface radialement externe (13a) et la vitesse d'avance (V2) de la surface de transport (23) est supérieur à environ 0,95.

**7.** Procédé tel que revendiqué dans la revendication 1, dans lequel le rapport (V1/V2) entre la vitesse linéaire (V1) de la surface radialement externe (13a) et la vitesse d'avance (V2) de la surface de transport (23) est inférieur à environ 1,10.

**8.** Procédé tel que revendiqué dans la revendication 1, dans lequel le rapport (V1/V2) entre la vitesse linéaire (V1) de la surface radialement externe (13a) et la vitesse d'avance (V2) de la surface de transport (23) est compris entre environ 1,0 et environ 1,05.

9. Procédé tel que revendiqué dans la revendication 1, dans lequel le rapport (V1/V2) entre la vitesse linéaire (V1) de la surface radialement externe (13a) et la vitesse d'avance (V2) de la surface de transport (23) est compris entre environ 0,98 et environ 1,0.

10. Appareil de construction de pneus permettant le roulage à plat pour roues de véhicule munis d'inserts de flanc, comprenant :

un transporteur (22) définissant au moins une surface de transport (23) mobile le long d'une direction d'acheminement (A) pour un élément allongé continu (5, 12) ;
un dispositif de coupe (24) agissant de manière fonctionnelle sur le transporteur (22) pour couper une section dudit élément allongé continu (5, 12) ;
un tambour de formation (13) pouvant tourner autour d'un axe principal (X-X) de celui-ci, ledit tambour de formation (13) étant muni de deux évidements circonférentiels (25) ;
dans lequel le tambour de formation (13) a une surface radialement externe (13a) qui peut faire face à la surface de transport (23) à une distance (d) essentiellement égale à l'épaisseur (s) de ladite section ;
une unité de commande (U) reliée de manière fonctionnelle au transporteur (22) et au tambour de formation (13) pour régler le rapport entre une vitesse d'avance (V2) de la surface de transport (23) du transporteur (22) et une vitesse de rotation (ω) du tambour de formation (13),
un dispositif de mesure (29) de la longueur de la section relié de manière fonctionnelle à l'unité de commande (U),
un premier moteur (M1) relié à l'unité de commande (U) et pouvant être relié de manière fonctionnelle au tambour de formation (13),
dans lequel le transporteur (22) comprend deux courroies transporteuses parallèles et côte à côte et deux surfaces de transport (23a, 23b) disposées mutuellement côte à côte et en parallèle,
dans lequel le transporteur (22) comprend deux deuxièmes moteurs (M2), chacun étant relié de manière fonctionnelle à une courroie transporteuse respective, et
dans lequel lesdites deux surfaces de transport (23a, 23b) ont des vitesses d'avance (V2', V2") pouvant être réglées indépendamment l'une de l'autre.

11. Appareil tel que revendiqué dans la revendication précédente, dans lequel chacun desdits deuxièmes moteurs (M2) est en axe électrique avec le premier moteur (M1) et relié à ladite unité de commande (U).

12. Appareil tel que revendiqué dans la revendication 10, dans lequel la surface de transport (23) est une surface plate.

13. Appareil tel que revendiqué dans la revendication 10, dans lequel le tambour de formation (13) peut être rapproché de la surface de transport (23) par le haut.

14. Appareil tel que revendiqué dans la revendication 10, comprenant une tête d'extrusion (E) placée en amont du transporteur (22) et distribuant ledit élément allongé continu (5, 12).

15. Appareil tel que revendiqué dans la revendication 10, comprenant des dispositifs de stockage (21) placés en amont du transporteur (22) ; l'élément allongé continu (5, 12) étant distribué par lesdits dispositifs de stockage (21).

Fig.1

# Fig.2

Fig.3

Fig.4

Fig.5

Fig.6

# Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009131451 A
- EP 1785263 A
- US 7694709 B
- US 20080149259 A
- EP 0164709 A2